# EUROPEAN PATENT APPLICATION

(11) **EP 2 899 949 A1**
(43) Date of publication of application: **29.07.2015**
(21) Application number: 15152498.0
(22) Date of filing: 26.01.2015
(51) Int. Cl.: H04L 29/08, H04W 4/20, H04L 29/06

(54) **Terminal, server, and method for managing the status of users of terminals**

(30) Priority: 24.01.2014 KR 20140009174
(71) Applicant: Samsung Electronics Co., Ltd, Gyeonggi-do 443-742 (KR)
(72) Inventor: Oh, Hyung-rai, Gyeonggi-do (KR); Won, Young-min, Gyeonggi-do (KR); Cha, Soon-back, Gyeonggi-do (KR)
(74) Representative: Appleyard Lees

(57) **Abstract**

A terminal, a server, and a method for managing information about a status of a terminal user are provided. The method includes receiving an identifier of a second terminal of a counterpart user from a first terminal of a first user, receiving information about a status of the counterpart user from the second terminal using the received identifier of the second terminal, and transmitting the received information about the status of the counterpart user to the first terminal.

## Description

### CROSS-REFERENCE TO RELATED APPLICATION

This application claims priority from Korean Patent Application No. 10-2014-0009174, filed on January 24, 2014 in the Korean Intellectual Property Office, the disclosure of which is incorporated herein in its entirety by reference.

### BACKGROUND

### 1. Field

Apparatuses and methods consistent with exemplary embodiments relate to a terminal, a server, and a method for managing information about the status of users of terminals.

### 2. Description of Related Art

With the development of communication technologies, electronic devices are becoming smaller in size. In addition, electronic devices such as personal terminals have been widely distributed to general consumers. For example, mobile terminals such as smartphones, tablet personal computers (PCs), notebooks, and the like, have been widely distributed.

Various types of programs may be executed by a smartphone or a smart tablet PC. For example, a program executed on a smartphone or a smart tablet PC may be referred to as an application. Various types of applications have been developed by application developers.

A user of a terminal may initiate a call to a terminal of another user or transmit a message to the terminal of another user using a contact application. If the terminal of the other user is turned off or moves outside of a service area when the user of the terminal initiates the call to the terminal of the other user, the call may fail to connect. Also, if the other user is unable to answer the call, the call may fail to connect. As a result of the call failing to connect, the user must retry the call.

### SUMMARY

Exemplary embodiments overcome the above disadvantages and other disadvantages not described above. Also, an exemplary embodiment is not required to overcome the disadvantages described above, and an exemplary embodiment may not overcome any of the problems described above.

One or more exemplary embodiments provide a terminal, a server, and a method for managing information about a status of a user of a terminal.

One or more exemplary embodiments also provide a terminal, a server, and method for providing a terminal user with a notification of a change in a status of another user.

According to an aspect of an exemplary embodiment, there is provided a method of managing information about a status of a user, the method including: receiving an identifier of a second terminal of a counterpart user from a first terminal; receiving information about a status of the counterpart user from the second terminal using the received identifier of the second terminal; and transmitting the received information about the status of the counterpart user to the first terminal.

The method may further include mapping an identifier of the first terminal to the identifier of the second terminal, and storing the mapped identifiers of the first and second terminals. The transmitting of the received information about the status of the counterpart user to the first terminal may include acquiring the mapped identifier of the first and second terminals; and transmitting the received information about the status of the counterpart user to the first terminal based on the acquired mapped identifier of the first terminal.

Prior to receiving information for identifying the second terminal, the method may further include storing the information about the status of the counterpart user. The transmitting the received information about the status of the counterpart user to the first terminal may include comparing the received information about the status of the counterpart user to the stored information about the status of the counterpart user; and in response to the received information about the status of the counterpart user being different from the stored information about the status of the counterpart user based on the comparison, transmitting the received information about the status of the counterpart user to the first terminal.

The transmitting of the received information about the status of the counterpart user to the first terminal may include, in response to the received information about the status of the counterpart user being different from the stored information about the status of the counterpart user based on the comparison, transmitting a notification of a change in the status of the counterpart user to the first terminal.

The status of the counterpart user may be displayed on a user list of a contact application displayed on a screen of the second terminal of the counterpart user and may be changed according to a user input of the counterpart user.

The information about the status of the counterpart user may be displayed in an area of a user list of a contact application displayed on a screen of the first terminal which displays user information of the counterpart user.

The status of the counterpart user may include at least one of an available state, a disturbance prohibition state, and an out of service area state.

According to an aspect of another exemplary embodiment, there is provided a server including: a communicator to receive an identifier for identifying a second terminal of a counterpart user from a first terminal, receive information about a status of the counterpart user from the second terminal using the received identifier of the second terminal, and transmit the received information about the status of the counterpart user to the first terminal; and a controller to control the communicator.

The server may further include a storage to map and store an identifier of the first terminal and the identifier of the second terminal. The controller may acquire the identifier of the mapped first and second terminals from the storage, and transmit the received information about the status of the counterpart user to the first terminal based on the acquired mapped identifier of the first terminal.

The server may further include a storage configured to store the information about the status of the counterpart user prior to receiving information for identifying the second terminal. The controller may compare the received information about the status of the counterpart user to the stored information about the status of the counterpart user, and, in response to the received information about the status of the counterpart user being different from the stored information about the status of the counterpart user based on the comparison, transmit the received information about the status of the counterpart user to the first terminal.

In response to the received information about the status of the counterpart user being different from the information about the status of the counterpart user stored in the storage based on the comparison, the controller may transmit a notification of a change in the status of the counterpart user to the first terminal.

The status of the counterpart user may be displayed on a user list of a contact application displayed on a screen of the second terminal of the counterpart user and may be changed according to a user input of the counterpart user.

The information about the status of the counterpart user may be displayed in an area of a user list of a contact application displayed on a screen of the first terminal that displays user information of the counterpart user.

The status of the counterpart user may include at least one of an available state, a disturbance prohibition state, and an out of service area state.

According to an aspect of another exemplary embodiment, there is provided a first terminal including: an input unit to receive an identifier for identifying a second terminal of a counterpart user; a communicator to transmit the received identifier to a server and receive a notification of a change in a status of the counterpart user from the server; and an output unit to output received information about the status of the counterpart user.

The first terminal may further include a storage to store a user list including identifiers of at least one or more users. The input unit may receive an input selection of an identifier of the counterpart user from among the identifiers included in the user list in order to receive the identifier for identifying the second terminal.

### BRIEF DESCRIPTION OF THE DRAWINGS

The above and/or other aspects will become apparent and more readily appreciated from the following description of exemplary embodiments, taken in conjunction with the accompanying drawings in which:
FIG. 1 is a view illustrating a network environment in which a terminal and a server operate, according to an exemplary embodiment;
FIG. 2 is a block diagram illustrating a terminal according to an exemplary embodiment;
FIG. 3 is a block diagram illustrating a server according to an exemplary embodiment;
FIG. 4 is a flowchart of a method of managing a status of a terminal user according to an exemplary embodiment;
FIG. 5 is a flowchart of a method of managing a status of a terminal user, according to another exemplary embodiment;
FIG. 6 is a view illustrating a process of setting a status of a counterpart user on a user list included in an execution screen of a contact application of a second terminal, according to an exemplary embodiment;
FIG. 7 is a view illustrating a process of displaying a status of a counterpart user of a second terminal on a user list included in an execution screen of a contact application of a first terminal, according to an exemplary embodiment; and
FIG. 8 is a diagram illustrating a process of setting whether to receive notification information for notifying a user of a change in a status of a counterpart user, on a user list included in an execution screen of a contact application of a first terminal, according to an exemplary embodiment.

### DETAILED DESCRIPTION

Reference will now be made to the exemplary embodiments, examples of which are illustrated in the accompanying drawings, wherein like reference numerals refer to like elements throughout. In this regard, the exemplary embodiments may have different forms and should not be construed as being limited to the descriptions set forth herein. Accordingly, the exemplary embodiments are merely described below, by referring to the figures, to explain aspects of the present description. Expressions such as "at least one of," when preceding a list of elements, modify the entire list of elements and do not modify the individual elements of the list.

It will be understood that, although the terms, 'first', 'second', and the like, may be used herein to describe various elements, these elements should not be limited by these terms. These terms are only used to distinguish one element from another. For example, a first element could be termed a second element, and, similarly, a second element could be termed a first element, without departing from the scope of the exemplary embodiments.

The terminology used herein is for the purpose of describing exemplary embodiments only and is not intended to be limiting of the exemplary embodiments. As used herein, the singular forms "a," "an," and "the," are intended to include the plural forms as well, unless the context clearly indicates otherwise. It will be further understood that the terms "comprises," "comprising," "includes," and/or "including," when used herein, specify the status of stated features, integers, steps, operations, elements, and/or components, but do not preclude the status or addition of one or more other features, integers, steps, operations, elements, components, and/or groups thereof.

Also, according to one or more exemplary embodiments, a status of a user indicates whether the user may communicate with another terminal using a terminal of the user. The terminal may set the status based on a user input. For example, the status may include an available state, a disturbance prohibition state, an out of service state, and the like, but is not limited thereto.

Unless otherwise defined, all terms (including technical and scientific terms) used herein have the same meaning as commonly understood by one of ordinary skill in the art to which the exemplary embodiments belong. The terms herein, such as those defined in commonly used dictionaries, should be interpreted as having a meaning that is consistent with their meaning in the context of the relevant art and will not be interpreted in an idealized or overly formal sense unless expressly so defined herein.

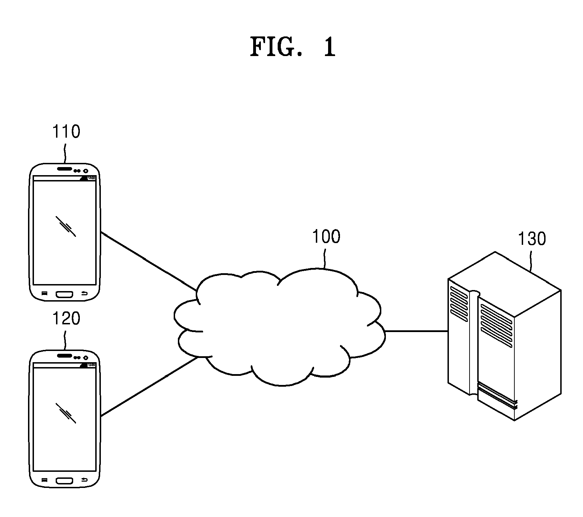

Hereinafter, a first terminal 110, a server 130, and a method for managing a status of a user of a terminal according to exemplary embodiments are described with reference to FIGS. 1 through 5.

FIG. 1 is a view illustrating a network environment in which the first terminal 110 and the server 130 operate, according to an exemplary embodiment. Referring to FIG. 1, the network environment in which the first terminal 110 and the server 130 operate includes a communication network 100, at least one or more first terminals 110 that are connected to the communication network 100, and the server 130 that is connected to the communication network 100.

The communication network 100 may comply with a wired and/or a wireless communication standard. For example, the communication network 100 may comply with a communication standard such as WiFi, universal mobile telephone system (UMTS)/general packet radio service (GPRS), Ethernet, and the like. The communication network 100 may be one of various types of networks such as a local area network (LAN), a metropolitan area network (MAN), a wide area network (WAN), etc. A communication network 100 that connects elements to one another may be different from a communication network 100 that connects at least one element to other elements. For convenience of description, the term "communication network 100" should be construed as encompassing all types of communication networks.

The first terminal 110 may be connected to the communication network 100. For convenience of description, two first terminals 110 are illustrated in FIG. 1. However, the number of first terminals 110 may be one or more. For example, a network environment may include at least two or more first terminals 110 that are connected to the communication network 100. The first terminal 110 may be a portable terminal such as a smartphone, a tablet PC, a notebook computer, a television, or other type of consumer electronic.

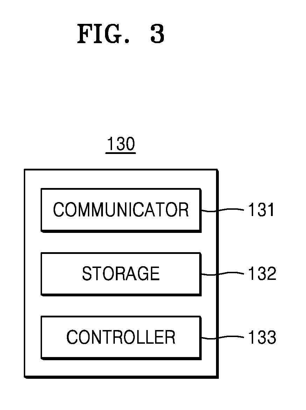

The server 130 may be connected to the communication network 100. The server 130 may be connected to the first terminal 110 through the communication network 100. The server 130 may exchange data with the first terminal 110. An example of the sever 130 is described with reference to FIG. 3.

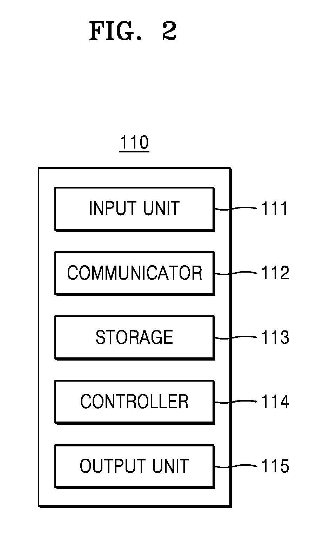

FIG. 2 is a block diagram illustrating the first terminal 110, according to an exemplary embodiment. Referring to FIG. 2, the first terminal 110 includes an input unit 111, a communicator 112, a storage 113, a controller 114, and an output unit 115.

The input unit 111 may receive information for identifying a second terminal 120. The information for identifying the second terminal 120 may be an identifier that identifies a terminal 120 of a counterpart user. For example, if a user of the first terminal 110 wants to receive a notification of a change in a status of the counterpart user, the user may input the information for identifying the second terminal 120 through the input unit 111. In this example, the user may select the counterpart user from a list of other users included in contact information in order to input the information for identifying the second terminal 120. The contact information may be stored in the storage 113. The contact information may include a user list including identifiers of at least one or more users.

The input unit 111 may also receive, from the user, information indicating the status of the user. A user may set his or her status by using the first terminal 110 of the user. That is, the user may input the information about the status of the user through the input unit 111 of the first terminal 110 of the user. For example, the input unit 111 may include a touch screen, a button, a mouse, a keyboard, a camera for receiving motion commands, a speech recognition module for receiving vocal commands, and the like.

For example, the status of the user may be one of an available state, a disturbance prohibition state, an out of service state, and the like. If the user is available for a call or message chat, the user may set the status of the user to the available state. If the user does not want to be disturbed, or the user otherwise does not wish to be available for communication via a call or message chat, the user may set the status of the user to the disturbance prohibition state. In the disturbance prohibition state the user may prevent other user terminals from contacting the terminal of the user. As another example, the first terminal 110 of the user is turned off or a terminal of a counterpart user is outside of a service area, the status of the user may be set to out of service.

In this example, a list of user statuses that may be selected by the user may be displayed on a screen of the first terminal 110. For example, a user list may be displayed on an execution screen of a contact application of the first terminal 110. Also, if the user selects his or her own name from the user list, icons for selecting the status of the user may be displayed. The user may also select one of the icons to set the status of the user. In addition to the icons for selecting the status, a button may be displayed to activate a function that informs another terminal of the status of the user. Therefore, the user may touch the displayed button to activate or inactivate the function that informs the other terminal of the status of the user.

In the same manner as described above, a counterpart user may also set a status of the counterpart user through the second terminal 120.

The communicator 112 may transmit the information for identifying the second terminal 120 to the server 130. In this example, the information for identifying the second terminal 120 may be input by the user via the input unit 111. For example, the communicator 112 may transmit an identifier for identifying the second terminal 120 of the counterpart user to the server 130. The communicator 112 may also transmit the information about the status of the user to the server 130, which may also be input by the user via the input unit 111.

The communicator 112 may receive information about a status of the counterpart user or a notification of a change in the status of the counterpart user from the server 130. In this example, the information about the status of the counterpart user may be reflected in a user list displayed on an execution screen of a contact application of the first terminal 110. For example, a name and a phone number of the counterpart user and an icon indicating the status of the counterpart user may be displayed in the user list that is displayed on the execution screen of the contact application of the first terminal 110. Also, a button for setting a notification that indicates a change in a status of each user may be displayed in the user list displayed on the execution screen of the first terminal 110.

For example, the communicator 112 may include a 3G module, a long term evolution (LTE) module, a WiFi module, a LAN card, and/or another network interface module.

The storage 113 may store information received through the input unit 111 and information received through the communicator 112. The storage unit 113 may store the information for identifying the second terminal 120, the information about the status of the counterpart user, the information about the status of the user of the first terminal 110, and the like.

The storage 113 may store information for identifying at least one or more second terminals 120, for example, in case the user of the first terminal 110 wants to receive a notification of a change in status of each of the at least one or more second terminals 120. The storage 113 may store a list of information for identifying the second terminal 120. If the information for identifying the second terminal 120 is received through the input unit 111, the received information for identifying the second terminal 120 may be added to the list of information. If the counterpart user uses the second terminal 120 to initiate a call, a message chat, or the like, or if a preset amount of time elapses, the information for identifying the second terminal 120 may be removed from the list of information.

For example, the storage 113 may include a random access memory (RAM), a flash memory, a hard disc, a database (DB), and/or another storage device.

The controller 114 may control other elements included in the first terminal 110. For example, the controller 114 may include a central processing unit (CPU), a plurality of processing devices, and the like.

The output unit 115 may output the information about the status of the counterpart user or the notification of a change in the status of the counterpart user. The output unit 115 may include a display apparatus, a touch screen, a speaker, and/or another output device.

According to various aspects, the second terminal 120 described herein may have the same structure as the first terminal 110 described above and may perform the same operations as the first terminal 110.

FIG. 3 is a block diagram illustrating the server 130, according to an exemplary embodiment. Referring to FIG. 3, the server 130 may include a communicator 131, a storage 132, and a controller 133.

The communicator 131 may receive the information for identifying the second terminal 120 from the first terminal 110. The information for identifying the second terminal 120 may be an identifier of the second terminal 120 of a counterpart user and, for example, may include a name of the counterpart user and a phone number of the second terminal 120. The communicator 131 may also receive the information about the status of the user from the first terminal 110. For example, the communicator 131 may receive the information about the status of the counterpart user from the second terminal 120 corresponding to the counterpart user. For example, the communicator 131 may be a network interface module, and the like.

The communicator 131 may transmit the information about the status of the counterpart user to the first terminal 110. For example, the information to be transmitted may include information that the communicator 131 has received from the second terminal 120 about the status of the counterpart user. If the received information about the status of the counterpart user is different from pre-stored information about the status of the counterpart user, the communicator 131 may transmit the received information about the status of the counterpart user to the first terminal 110 of the user. Also, if the received information about the status of the counterpart user is different from the pre-stored information about the status of the counterpart user, the communicator 131 may transmit a notification of a change in the status of the counterpart user to the first terminal 110.

The storage 132 may store the information received through the communicator 131. For example, the storage 132 may store information for identifying at least one or more second terminals 120, information about the status of the counterpart user, information about the status of the user of the first terminal 110, and the like. Accordingly, the user of the first terminal 110 may receive a notification of a change in status of each of the at least one or more second terminals 120 based on the stored information.

An identifier of the second terminal 120 of the counterpart user may be mapped to an identifier of the first terminal 110 of the counterpart user and then stored in the storage unit 132. If a plurality of users want to receive a notification of a change in the status of the counterpart user each time the status of the counterpart user changes, an identifier list including identifiers of a plurality of first terminals 110 may be mapped to the identifier of the second terminal 120.

Therefore, if the communicator 131 receives information from the second terminal 120 about the status of the counterpart user, the communicator 131 may transmit the information about the status of the counterpart user to the first terminal 110 based on which identifier is mapped to the identifier of the second terminal 120.

The storage 132 may store a list of information for identifying the second terminal 120. If the information for identifying the second terminal 120 is received from the first terminal 110, the received information of the second terminal 120 may be added to the list of information. If the information about the status of the counterpart user or the notification of a change in the status of the counterpart user is transmitted to the first terminal 110 through the communicator 131, the information for identifying the second terminal 120 may be removed from the list of information.

In these examples, the storage 132 may include a DB and/or another storage device. Also, the controller 133 may control other elements included in the server 130 and may include a CPU.

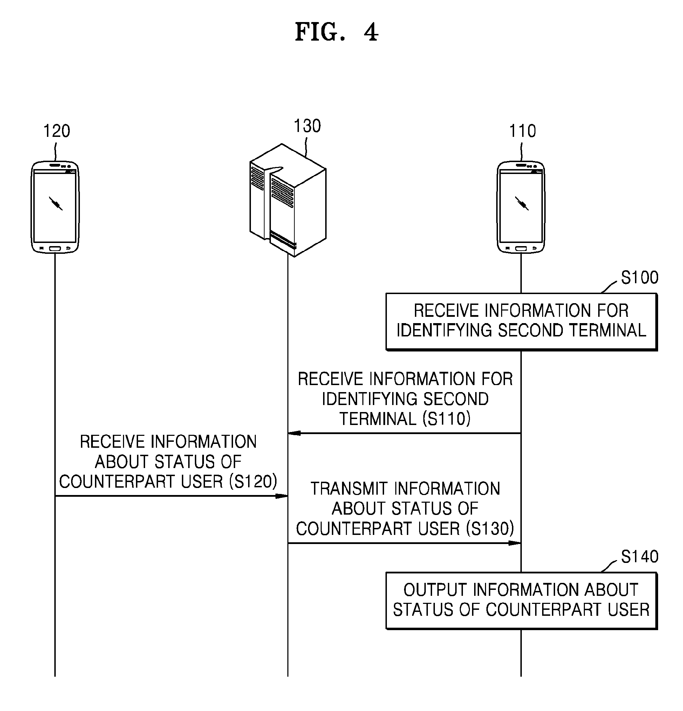

FIG. 4 is a flowchart of a method of managing a status of a user of a terminal, according to an exemplary embodiment. Referring to FIG. 4, in operation S100, the first terminal 110 receives information for identifying at least one or more second terminals 120. For example, the information for identifying the second terminals 120 may be an identifier for identifying the second terminal 120 of the counterpart user and may include a name of the counterpart user and a phone number of the second terminal 120. The first terminal 110 may receive the information for identifying the at least one or more second terminals 120 from the user via a user input, in an example in which the user wants to receive information about the status of at least one or more counterpart users. The controller 114 of the first terminal 110 may control the storage unit 113 to store the received information for identifying the second terminal 120.

For example, if the status of the counterpart user indicates that the counterpart user currently does not wish to be disturbed (i.e., the status of the counterpart user is set to 'do not disturb'), the user may not be allowed to initiate a call to the counterpart user, the call may go straight to voicemail, and the like. When the status of the counterpart user indicates that the counterpart user is in an available state (i.e., the status of the counterpart user is 'available'), the user may be allowed to initiate a call to the counterpart user. Therefore, for example, the user may want to receive a notification when the status of the counterpart user has changed from the disturbance prohibition state to the available state. Here, the user may input the information for identifying the second terminal 120 to the first terminal 110.

The information about the status of the counterpart user may include information about a current status of the counterpart user, a notification of a change in a status of the counterpart user, and the like.

In operation S110, the server 130 receives the information for identifying the second terminal 120 from the first terminal 110. That is, the first terminal 110 may transmit the received information for identifying the second terminal 120 to the server 130. The server 130 may store the information for identifying the second terminal 120 in the storage 132.

In operation S120, the server 130 receives information about a status of the counterpart user from the second terminal 120 of the counterpart user. The counterpart user may set a status of the counterpart user by using the second terminal 120. If a newly set status is different from a previously set status, the controller 114 of the second terminal 120 may store the newly set status in the storage unit. As a non-limiting example, the counterpart user may change the status of the counterpart user from a disturbance prohibition state into an available state.

The communicator 112 of the second terminal 120 may transmit information about the newly set status to the server 130. That is, the server 130 may receive information about the status of the counterpart user. The server 130 may store the information about the status of the counterpart user in the storage 132.

In operation S130, the server 130 transmits the received information about the status of the counterpart user to the first terminal 110. For example, the controller 133 of the server 130 may search the storage 132 for an identifier of the second terminal 120 to acquire identifiers of at least one or more first terminals 110 that are mapped to the identifier of the second terminal 120. The server 130 may transmit the information about the status of the counterpart user to the first terminal 110.

If the received information about the status of the counterpart user is different from pre-stored or previously stored information about the status of the counterpart user, the communicator 131 of the server 130 may transmit the received information about the status of the counterpart user to the first terminal 110. Also, if the received information about the status of the counterpart user is different from the pre-stored information about the status of the counterpart user, the communicator 131 may transmit a notification of a change in the status of the counterpart user to the first terminal 110. In this example, the first terminal 110 may receive the information about the status of the counterpart user and/or the notification of the change in the status of the counterpart user from the server 130.

In operation S140, the first terminal 110 outputs the received information about the status of the counterpart user. For example, the output unit 115 of the first terminal 110 may output the information about the status of the counterpart user or the notification of the change in the status of the counterpart user. In this example, the notification of the change in the status of the counterpart user may be displayed on a display apparatus included in the output unit 115. For example, the notification of the change in the status of the counterpart user may be a message notifying the user that the status of the counterpart user has changed from one state to another, such as from the disturbance prohibition state into the available state. The user of the first terminal 110 may check the message and know that they are capable of initiating a call to the second terminal 120 of the counterpart user.

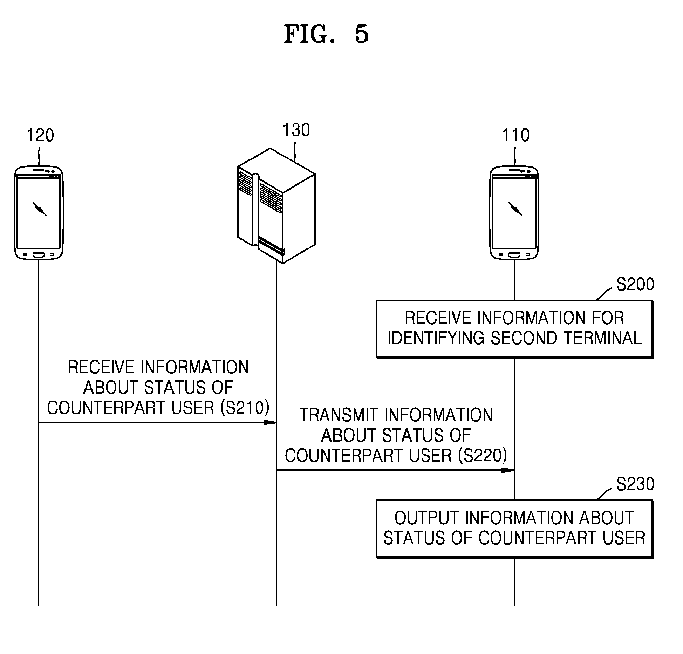

FIG. 5 is a flowchart of a method of managing a status of a user of a terminal, according to another exemplary embodiment. Referring to FIG. 5, in operation S200, the first terminal 110 receives information for identifying at least one or more second terminals 120. The first terminal 110 may receive the information for identifying the at least one or more second terminals 120 from a user, for example, when the user wants to receive information about the status of the at least one or more second terminals 120. The controller 114 of the first terminal 110 may store the received information for identifying the second terminals 120 in the storage 113.

In operation S210, the server 130 receives information about a status of a counterpart user from the second terminal 120 of the counterpart user. The counterpart user may set a status of the counterpart user (i.e., the counterpart user may set his or her status) using the second terminal 120. If a newly set status is different from a preset status, the controller 114 of the second terminal 120 may store the newly set status in the storage 113.

The communicator 112 of the second terminal 120 may transmit information about the newly set status to the server 130. That is, the server 130 may receive the information about the status of the counterpart user from the second terminal 120. The server 130 may store the information about the status of the counterpart user in the storage 132.

In operation S220, the server 130 transmits the received information about the status of the counterpart user to the first terminal 110. A list of counterpart terminals that transmit information about the statuses of respective counterpart users may be mapped to an identifier of the second terminal 120 and then stored in the storage 132 of the server 130. For example, all types of terminals that include contact information including the counterpart user may be included in the list of counterpart terminals. As another example, terminals of all users who are listed as friends of the counterpart user may be included in the list of counterpart terminals.

The controller 133 may search the storage 132 for an identifier of the second terminal 120 to acquire a list of mapped counterpart terminals. The communicator 131 may transmit the information of the status of the counterpart user to all of the other counterpart terminals included in the list of counterpart terminals. The first terminal 110 may be included in the list of other counterpart terminals. That is, the communicator 131 may transmit the information about the status of the counterpart user to the first terminal 110. The first terminal 110 may receive the information about the status of the counterpart user from the server 130.

In operation S230, the first terminal 110 outputs the received information about the status of the counterpart user. For example, the controller 114 of the first terminal 110 may compare the received information about the status of the counterpart user with information about the status of the counterpart user previously stored in the storage 113 to determine whether the status of the counterpart user has changed.

If it is determined that the status of the counterpart user has changed, the storage 113 of the first terminal 110 may store the newly received information about the status of the counterpart user. Also, if it is determined that the status of the counterpart user has changed, the controller 114 may search the storage 113 to determine whether a first user corresponding to the information received in operation S200 is the same as a second user of the received information. That is, if information about a plurality of first users is received in the operation S200, the controller 114 may determine whether the second user is included in the plurality of first users.

If the first user is the same as a second user or the second user is included in the plurality of first users, the output unit 115 of the first terminal 110 may output information about a status of the second user and/or a notification of a change in the status of the second user. For example, the notification of the change in status of the second user may be displayed on a display apparatus of the output unit 115 of the first terminal 110.

For example, a message notifying the first user that a status of the counterpart user has changed from a disturbance prohibition state into an available state may be displayed on the display apparatus of the first terminal 110. In response, a user of the first terminal 110 may check the message and know that the user of the first terminal may initiate a call to the second terminal 120 of the counterpart user.

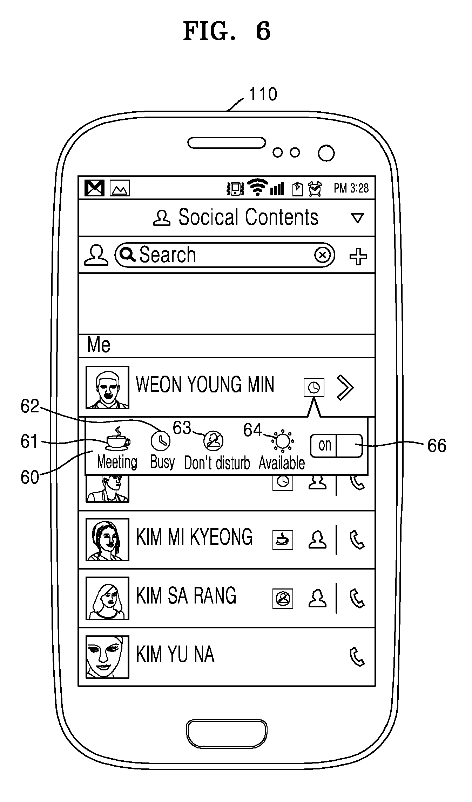

FIG. 6 is a view illustrating a process of setting a status of a counterpart user on a user list included in an execution screen of a contact application of the second terminal 120, according to an exemplary embodiment.

Referring to FIG. 6, the second terminal 120 may execute a contact application and display a user list. Also, if a counterpart user selects a name of the counterpart user (i.e., a counterpart user selects their own name), a pop-up window 60 for setting a status may be displayed. In this example, a plurality of icons 61, 62, 63, and 64 for setting the status are included in the pop-up window 60. For example, the counterpart user may select the icon 62 from among the plurality of icons 61, 62, 63, and 64 to set the status of the counterpart user as busy.

The contact application may also display a button 66 for activating a function that informs another terminal of the status be displayed in the pop-up window 60. That is, the button 66 may be used to turn on and off the contact application. For example, if the user selects the button 66, the second terminal 120 may activate or inactivate the function that informs the other terminal of the status of the user.

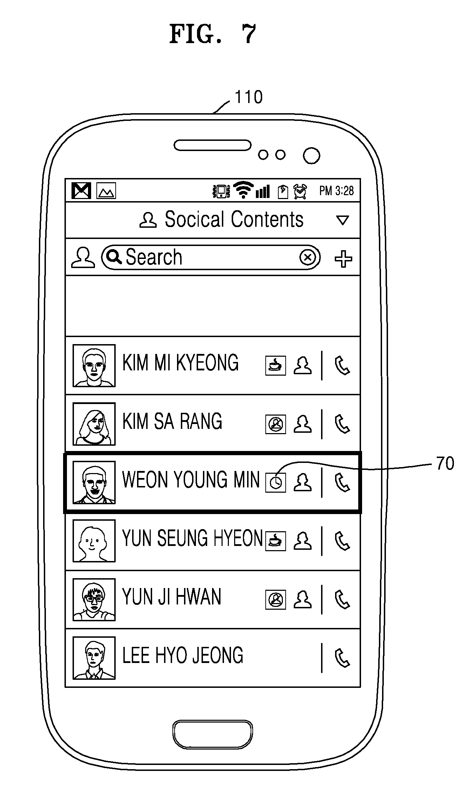

FIG. 7 is a view illustrating a process of displaying a status of a counterpart user of the second terminal 120 on a user list included in an execution screen of a contact application of the first terminal 110, according to an exemplary embodiment.

Referring to FIG. 7, the first terminal 110 may execute a contact application and display a user list. In this example, first terminal 110 may also display an icon or a plurality of icons such as icon 70 indicating a status of a counterpart user on the displayed user list. In this example, each of the plurality of icons corresponds to a respective user. Accordingly, a user of the first terminal 110 may simultaneously view the status of a plurality of counterpart users corresponding to a plurality of counterpart terminals as well as a status of the user of the first terminal 110 within the same list.

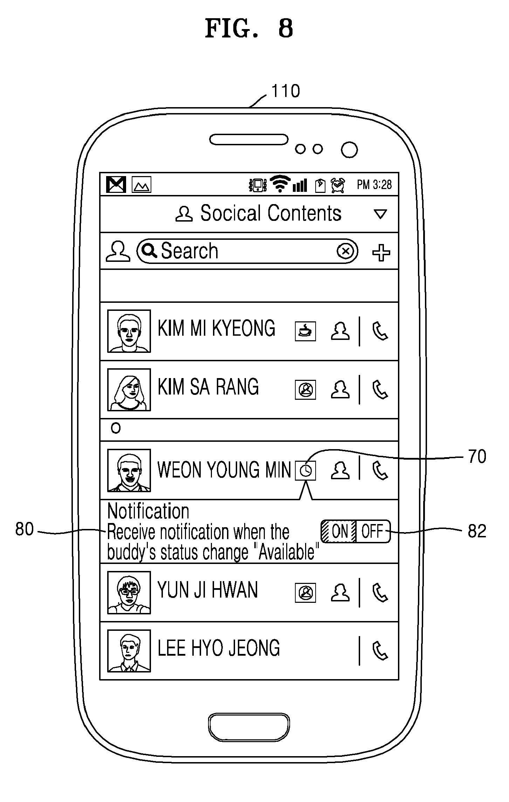

FIG. 8 is a view illustrating a process of setting whether to receive notification information for notifying a user of a change in a status of a counterpart user, on a user list included in an execution screen of a contact application of the first terminal 110, according to an exemplary embodiment.

Referring to FIG. 8, if a user selects an icon 70 on a user list included in an execution screen of a contact application, a pop-up window 80 may be displayed and may be used to set whether to receive notification information for notifying the user of a change in status of a counterpart user. For example, the user may touch a button 82 in the pop-up window 80 to set whether to receive the notification information for notifying the user of the change in status of the counterpart user.

As described herein, according to the one or more exemplary embodiments of the present invention, information about a status of a terminal user may be managed. Also, a notification of a change in a status of another user may be provided to the terminal user. Therefore, the terminal user may not need to continuously monitor a status of a counterpart user until the counterpart user is in an available state. Also, the counterpart user may set a status of the counterpart user to a disturbance prohibition state so that the counterpart user will not be disturbed. The counterpart user may also change the status of the counterpart user from the prohibitive state to an available state, for example, to answer a call.

The methods described above can be written as a computer program, a piece of code, an instruction, or some combination thereof, for independently or collectively instructing or configuring a processing device to operate as desired. Software and data may be embodied permanently or temporarily in any type of machine, component, physical or virtual equipment, computer storage medium or device that is capable of providing instructions or data to or being interpreted by the processing device. The software also may be distributed over network coupled computer systems so that the software is stored and executed in a distributed fashion. In particular, the software and data may be stored by one or more non-transitory computer readable recording mediums. The media may also include, alone or in combination with the software program instructions, data files, data structures, and the like. The non-transitory computer readable recording medium may include any data storage device that can store data that can be thereafter read by a computer system or processing device. Examples of the non-transitory computer readable recording medium include read-only memory (ROM), random-access memory (RAM), Compact Disc Read-only Memory (CD-ROMs), magnetic tapes, USBs, floppy disks, hard disks, optical recording media (e.g., CD-ROMs, or DVDs), and PC interfaces (e.g., PCI, PCI-express, WiFi, etc.). In addition, functional programs, codes, and code segments for accomplishing the example disclosed herein can be construed by programmers skilled in the art based on the flow diagrams and block diagrams of the figures and their corresponding descriptions as provided herein.

While one or more exemplary embodiments of the present invention have been described with reference to the figures, it will be understood by those of ordinary skill in the art that various changes in form and details may be made therein without departing from the spirit and scope of the present invention as defined by the following claims.

## Claims

1. A method of managing information about a status of a user, the method comprising:
receiving an identifier of a second terminal of a counterpart user from a first terminal;
receiving information about a status of the counterpart user from the second terminal using the received identifier of the second terminal; and
transmitting the received information about the status of the counterpart user to the first terminal.

2. The method of claim 1, further comprising:
mapping an identifier of the first terminal to the identifier of the second terminal, and storing the mapped identifiers of the first and second terminals,
wherein the transmitting the received information about the status of the counterpart user to the first terminal comprises:
acquiring the mapped identifiers of the first and second terminal; and
transmitting the received information about the status of the counterpart user to the first terminal based on the acquired mapped identifier of the first terminal.

3. The method of claim 1, further comprising, prior to receiving information for identifying the second terminal, storing the information about the status of the counterpart user,
wherein the transmitting the received information about the status of the counterpart user to the first terminal comprises:
comparing the received information about the status of the counterpart user to the stored information about the status of the counterpart user, and
in response to the received information about the status of the counterpart user being different from the stored information about the status of the counterpart user based on a result of the comparing, transmitting the received information about the status of the counterpart user to the first terminal.

4. The method of claim 3, wherein the transmitting the received information about the status of the counterpart user to the first terminal comprises:
in response to the received information about the status of the counterpart user being different from the stored information about the status of the counterpart user based on the result the comparing, transmitting a notification of a change in the status of the counterpart user to the first terminal.

5. The method of claim 1, wherein the status of the counterpart user is displayed on a user list of a contact application displayed on a screen of the second terminal of the counterpart user and is changed according to a user input of the counterpart user.

6. The method of claim 1, wherein the information about the status of the counterpart user is displayed in an area of a user list of a contact application displayed on a screen of the first terminal which displays user information of the counterpart user.

7. The method of claim 1, wherein the status of the counterpart user comprises at least one of an available state, a disturbance prohibition state, and an out of service area state.

8. A server comprising:
a communicator configured to receive an identifier for identifying a second terminal of a counterpart user from a first terminal, receive information about a status of the counterpart user from the second terminal using the received identifier of the second terminal, and transmit the received information about the status of the counterpart user to the first terminal; and
a controller configured to control the communicator.

9. The server of claim 8, further comprising:
a storage configured to map an identifier of the first terminal and the identifier of the second terminal, and store the mapped identifiers of the first and second terminals,
wherein the controller is configured to acquire the mapped identifiers of the first and second terminals from the storage, and transmit the received information about the status of the counterpart user to the first terminal based on the acquired mapped identifier of the first terminal.

10. The server of claim 8, further comprising:
a storage configured to store the information about the status of the counterpart user prior to receiving information for identifying the second terminal,
wherein the controller is configured to compare the received information about the status of the counterpart user to the stored information about the status of the counterpart user, and, in response to the received information about the status of the counterpart user being different from the stored information about the status of the counterpart user based on a result of the comparison, transmit the received information about the status of the counterpart user to the first terminal.

11. The server of claim 10, wherein the controller is configured to, in response to the received information about the status of the counterpart user being different from the information about the status of the counterpart user stored in the storage based on the result of the comparison, transmit a notification of a change in the status of the counterpart user to the first terminal.

12. The server of claim 8, wherein the status of the counterpart user is displayed on a user list of a contact application displayed on a screen of the second terminal of the counterpart user, and is changed according to a user input of the counterpart user.

13. The server of claim 8, wherein the information about the status of the counterpart user is displayed in an area of a user list of a contact application displayed on a screen of the first terminal which displays user information of the counterpart user.

14. The server of claim 8, wherein the status of the counterpart user comprises at least one of an available state, a disturbance prohibition state, and an out of service area state.
